# EUROPEAN PATENT APPLICATION

(11) **EP 1 195 939 A1**
(43) Date of publication of application: **10.04.2002**
(21) Application number: 01934320.1
(22) Date of filing: 23.05.2001
(51) Int. Cl.: H04L 1/22, H04L 12/44, H04B 10/207

(54) **REDUNDANT OPTICAL MULTIPLE-BRANCH COMMUNICATION SYSTEM**

(30) Priority: 31.05.2000 JP 2000163080
(71) Applicant: MITSUBISHI DENKI KABUSHIKI KAISHA, Tokyo 100-8310 (JP)
(72) Inventor: ICHIBANGASE, Hiroshi, Mitsubishi Denki K.K., Tokyo100-8310 (JP); KOZAKI, Seiji, Mitsubishi Denki Kabushiki Kaisha, Tokyo 100-8310 (JP); BESSHO, Yuzo, Mitsubishi Denki Kabushiki Kaisha, Tokyo 100-8310 (JP)
(74) Representative: Pfenning, Meinig & Partner GbR
(86) International application number: JP0104320
(87) International publication number: WO0193489

(57) **Abstract**

In the optical multi-branch communication system, a parent device (1) and a plurality of daughter devices (2-1 to 2-n) having a redundant construction are connected to each other through a current system optical network and a preliminary system optical network. There are further provided a delay controlling unit which controls each delay amount on the current-system optical network and the preliminary system optical network, and a selection switching control unit which, if one of the daughter devices on the current-system optical network and the preliminary system optical network fails, switches the daughter devices (2-1 to 2-n) to another optical network that is working normally.

## Description

### TECHNICAL FIELD

The present invention relates to an optical communication system. Particularly, this invention relates to a redundant optical multi-branch communication system in which a parent device and daughter devices having a redundant construction are connected to each other through an optical network of a current system and an optical network of a preliminary system.

### BACKGROUND ART

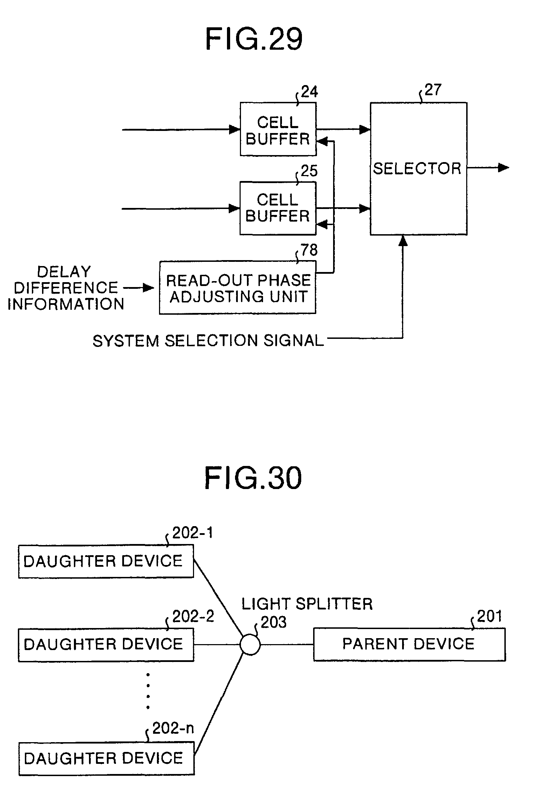

There is know an optical multi-branch communication system in which a parent device and a plurality of daughter devices are connected to each other through optical fibers. Fig. 30 is a block diagram that schematically shows a construction of an optical multi-branch communication system in which one parent device and a plurality of daughter devices are connected through optical fibers. The system shown in Fig. 30 is a construction of an optical multi-branch communication system that is defined in ITU-T (International Telecommunication Union-Telecommunication) Recommendation G. 983.1. As shown in Fig. 30, the parent device 201 and the daughter devices 202-1 to 202-n in number n are connected to each other through a light splitter 203.

In ITU-T, Recommendation G. 983.1, a downward optical signal from the parent device 201 is simultaneously distributed to each of the daughter devices 202-1 to 202-n by the light splitter 203, and upward optical signals from each one of the daughter devices 202-1 to 202-n are multiplexed by the light splitter 203, and sent to the parent device 201. In this case, an access controlling process for multiplexing the upward signals from the respective daughter devices 202-1 to 202-n, that is, a delay controlling process, is carried out on the light splitter 203. ITU-T, Recommendation G. 983.1 also describes this delay controlling process.

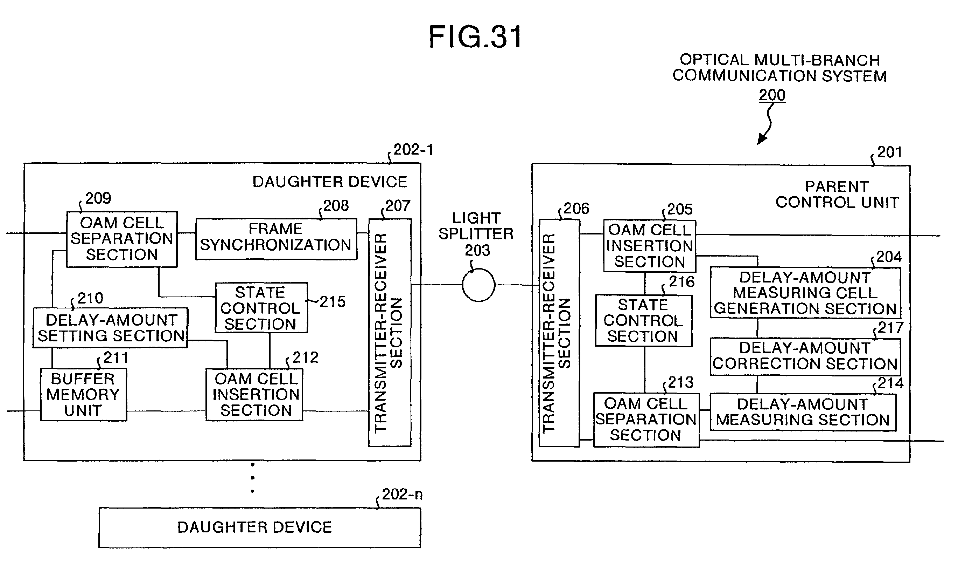

The block diagram in Fig. 31 shows the construction of the conventional optical multi-branch communication system. Thisopticalmulti-branch communication system 200 executes a sequence called "ranging" at the time of application of power. In this sequence of "ranging", in the parent device 201, a delay-amount measuring cell generation section 204 generates a delay-amount measuring cell to specific the daughter devices 202-1 to 202-n. Respective delay-amount measuring cells thus generated are multiplexed in a downward main data as OAM cells in an OAM (Operation Administration and Maintenance) cell inserting section 205, and transmitted to respective daughter devices 202-1 to 202-n by a transmitter-receiver section 206 constituted by an optical transmitter-receiver, a WDM (Wavelength Division Multiplexing) coupler, etc.

Each one of the daughter devices 202-1 to 202-n receives a light signal and converts it into an electric signal using a not shown optical transmitter-receiver, a WDM coupler etc., provided in a transmitter-receiver section 207. The obtained electric signal is synchronized in its frame based upon a frame synchronous bit within the OAM cell regularly inserted in a frame synchronous section 208 so that sections of the respective cells are recognized. In an OAM cell separation section 209, data cells directed to its daughter device 202-1 and OAM cells are discriminated, and separated. A delay amount setting section 210, upon receipt of a delay-amount measuring cell among the separated OAM cells, immediately informs an OAM cell insertion section 212 of this fact, and transmits a delay-amount measuring cell as a response to the parent device 201 through the transmitter-receiversection207andthelightsplitter203. In other words, if the daughter device 202-1 receives the delay-amount measuring cell, it immediately transmits the cell delay-amount measuring cell back to the parent device 201.

An OAM cell separation section 213 of the parent device 201 separates the data cell and the OAM cell. If there is any delay-amount measuring cell in the OAM cell separated by the OAM cell separation section 213, the delay-amount measuring section 214 measures the round trip time by the response of the delay-amount measuring cell. This round trip time refers to a period of round-trip time from the time when the cell is released from the parent device 201 to the time when it is again received by the parent device 201 after having reflected from the daughter device 202-1 through the light splitter 203. Based upon this round trip time, the delay-amount measuring cell generation section 204 calculates an amount of delay between the parent device 201 and the daughter device 202-1, and generates a delay-amount informing cell containing information of this amount of delay, and transmits this to the OAM cell inserting section 205. The OAM cell inserting section 205 allows the OAM cell to contain this delay-amount informing cell, and allows the transmitter-receiver section 206 to transmit this to the daughter device 202-1.

The OAM cell separation section 209 of the daughter device 202-1, which has received the cell containing this delay-amount informing cell, separates the OAM cell as described above, and if any delay-amount informing cell is contained in the OAM cell, the delay-amount setting section 210 sets this delay amount as a control amount on the reading time of a buffer memory 211. Thus, the transmitting timing from each of a plurality of daughter devices to the parent device is set in each of the daughter devices with the delay-time being incorporated therein so that the multiplexing process is carried out properly with the upward light transmission being carried out normally. If the cell is returned in the round-trip time within a normal range, the state controlling sections 215 and 216 determine this as an operative state, and the delay amount is measured with respect to the upward cell thereafter, and the delay-amount of the cell is finely adjusted by a delay-amount correcting section 217. On the other hand, if the cell is not returned in the round-trip time within the normal range, the state controlling sections 215 and 216 determine this as an abnormal state.

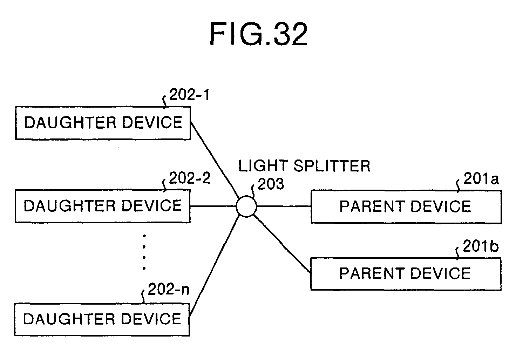

ITU-T, Recommendation G. 983.1, also defines a redundant optical multi-branch communication system in which a parent device is designed to have a redundant construction as shown in Fig. 32. In this redundant optical multi-branch communication system, instead of the parent device 201 shown in Fig. 30, a parent device 201a of a current system and a parent device 201b of a preliminary system are connected to a light splitter 203. The parent devices 201a, 201b are connected to the light splitter 203 through optical fibers respectively.

However, it has not been possible to properly carry out a switching control on a redundant optical multi-branch communication system in which at least one of the respective daughter devices 202-1 to 202-n is further provided with devices of the current-system and preliminary system and the parent device and the respective daughter devices have a duplex construction through the two light splitters 203, resulting in a failure in carrying out a redundant optical multi-branch communication with high reliability.

It is an object of this invention to provide a redundant optical multi-branch communication system which positively carries out optical communication with high reliability, even if the parent device and at least one daughter device have a duplex construction.

### DISCLOSURE OF THE INVENTION

The optical multi-branch communication system according to one aspect of the present invention includes a parent device having a redundant construction and a plurality of daughter devices, each having a redundant construction, are connected to each other through a current-system optical network and a preliminary system optical network. The optical multi-branch communication system also includes a delay controlling unit which controls each delay amount on the optical networks of the current-system and the preliminary system and a selection switching control unit which selectively switches to an appropriate optical network of the current-system and the preliminary system, based upon the result of the delay control carried out by the delay control unit.

According to the aspect, the delay control unit controls each delay-amount on the current-system optical network and the preliminary-system optical network, and based upon the result of the delay control by the delay control unit, the selection switching control unit selectively switches to an appropriate optical network of the current system and the preliminary system.

In the redundant optical multi-branch communication system according to the aspect, if a failure occurs in at least one daughter device on the optical network of the current system or the preliminary system, a control operation is carried out so that the plurality of daughter devices are selectively switched to another optical network that has no failure.

Thus, if a failure occurs in at least one daughter device on the optical network of the current system or the preliminary system, the selection switching control unit carries out the control operation so that the plurality of daughter devices are selectively switched to another optical network that has no failure.

In the redundant optical multi-branch communication system according to the aspect, based upon the result of the delay control of the delay control unit, the selection switching control unit selectively switches the optical network of the current system or the preliminary system for each of the daughter devices.

Thus, based upon the result of the delay control of the delay control unit, the selection switching control unit carries out the control operation so that the optical network of the current system or the preliminary system is selectively switched for each of the daughter devices.

In the redundant optical multi-branch communication system according to the aspect, the parent device is provided with a plurality of buffers for temporarily store information input through the optical network of the current system or the preliminary system, a table for storing first identifying information of each daughter device that has been preliminarily set and second identifying information that is information sent from each daughter device, in association with each other, and a selective reading control unit which identifies a transmission end of information input from the optical networks of the current system and the preliminary system by reference to the corresponding relationship on the table and for controlling a reading operation from the buffer corresponding to the transmission end.

Thus, the table stores the first identifying information of each daughter device that has been preliminarily set and second identifying information that is information sent from each daughter device in association with each other, and on the parent device, the buffers temporarily store information input through the optical network of the current system or the preliminary system, and the selective reading control unit identifies a transmission end of information input from the optical networks of the current system and the preliminary system by reference to the corresponding relationship on the table and controls a reading operation from the buffer corresponding to the transmission end.

In the redundant optical multi-branch communication system according to the aspect, based upon the result of the delay control of the delay control unit, each of the plurality of daughter devices determines an optical network to which switching is made by the selection switching control unit based upon the result of the delay control of the delay control unit.

Thus, each of the daughter devices determines an optical network to which switching is made by the selection switching control unit based upon the result of the delay control of the delay control unit.

In the redundant optical multi-branch communication system according to the invention, the parent device preliminarily determines an optical network to which selection switching is made by the selection switching control unit for each of the daughter devices, and informs each of the daughter devices of the determined network to which selective switching is made, and each of the daughter devices determines the network to which selective switching is made by the selection switching control unit, based upon the network for selective switching informed by the parent device.

Thus, the parent device preliminarily determines an optical network to which selection switching is made by the selection switching control unit for each of the daughter devices, and informs each of the daughter devices of the determined network to which selective switching is made, and each of the daughter devices determines the network to which selective switching is made by the selection switching control unit, based upon the network for selective switching informed by the parent device.

The optical multi-branch communication system according to one aspect of the present invention includes a parent device having a redundant construction and a plurality of daughter devices, each having a redundant construction, are connected to each other through a current-system optical network and a preliminary system optical network and a virtual path having a redundant construction is set so as to connect the parent device and the daughter devices. The optical multi-branch communication system further includes a quality monitoring section which inspects quality on the virtual path basis, and a selection switching control unit which selectively switches to an appropriate virtual path based upon the results of the quality inspection on the virtual path basis made by the quality monitoring section.

According to the above-mentioned aspect, the quality monitoring section inspects quality on the virtual path basis, and the selection switching control unit selectively switches to an appropriate virtual path based upon the results of the quality inspection on the virtual path basis made by the quality monitoring section.

The redundant optical multi-branch communication system according to the aspect further includes a delay control unit which controls each of the delay amounts on the optical networks of the current system and preliminary system, and the selection switching control unit carries out a switching control on the virtual path basis when the result of delay control of the delay control unit is within a predetermined delay amount.

Thus, the delay control unit controls each of the delay amounts on the optical networks of the current system and preliminary system, and the selection switching control unit carries out a switching control on the virtual path basis if the result of delay control of the delay control unit is within a predetermined delay amount.

In the redundant optical multi-branch communication system according to the aspect further includes a delay difference calculation unit which finds each of delay differences between the optical networks of the current system and preliminary system and for calculating delay difference information between the optical networks based upon the respective delay differences, and the selective control unit delays information from the optical network the delay difference of which is small.

Thus, the delay difference calculation unit finds each of delay differences between the optical networks of the current system and preliminary system, and calculates delay difference information between the optical networks based upon the respective delay differences, and the selective control unit delays information from the optical network the delay difference of which is small.

In the redundant optical multi-branch communication system according to the aspect, the selection switching control unit carries out a forceful switching operation by using an external switching trigger.

Thus, the selection switching control unit carries out a forceful switching operation by using an external switching trigger so that a redundant switching operation is carried out without any hit.

In the redundant optical multi-branch communication system according to the aspect, some of the plurality of daughter devices have a non-redundant construction.

Thus, some daughter devices of the plurality of daughter devices have a non-redundant construction.

### BRIEF DESCRIPTION OF THE DRAWINGS

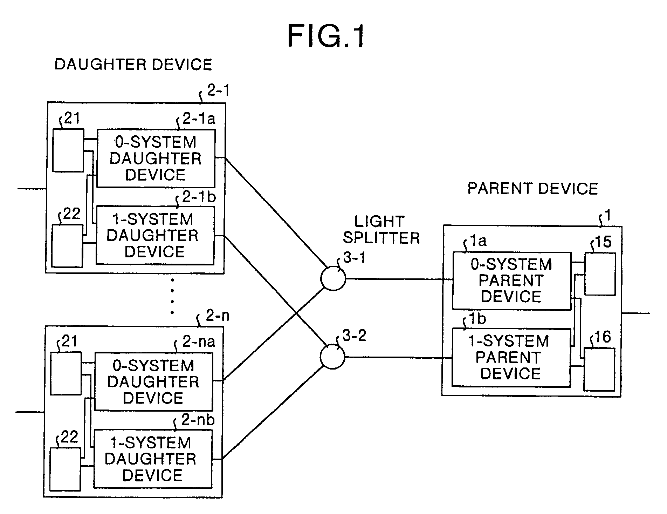

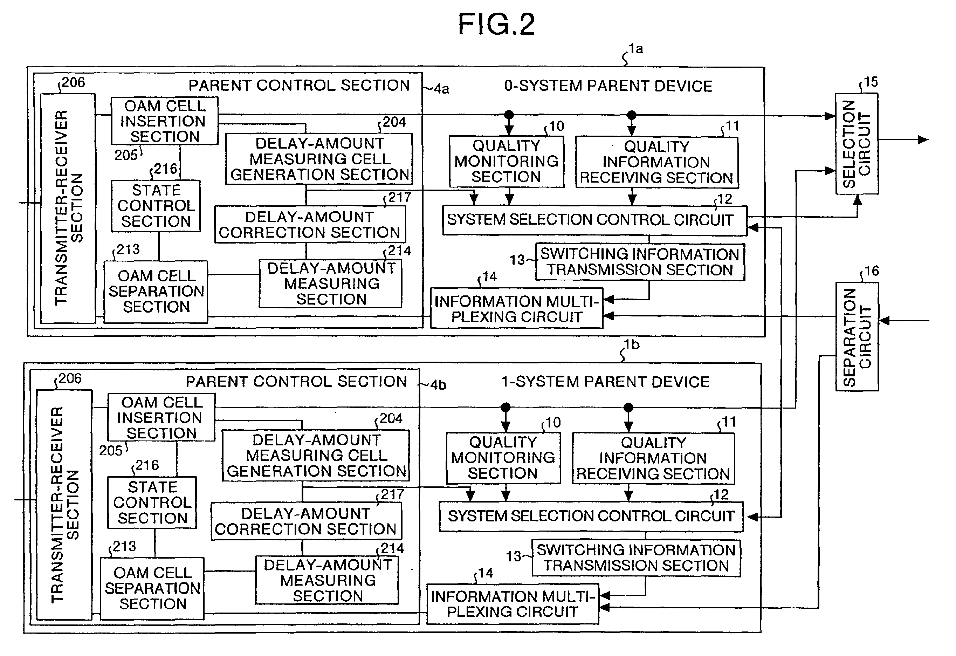

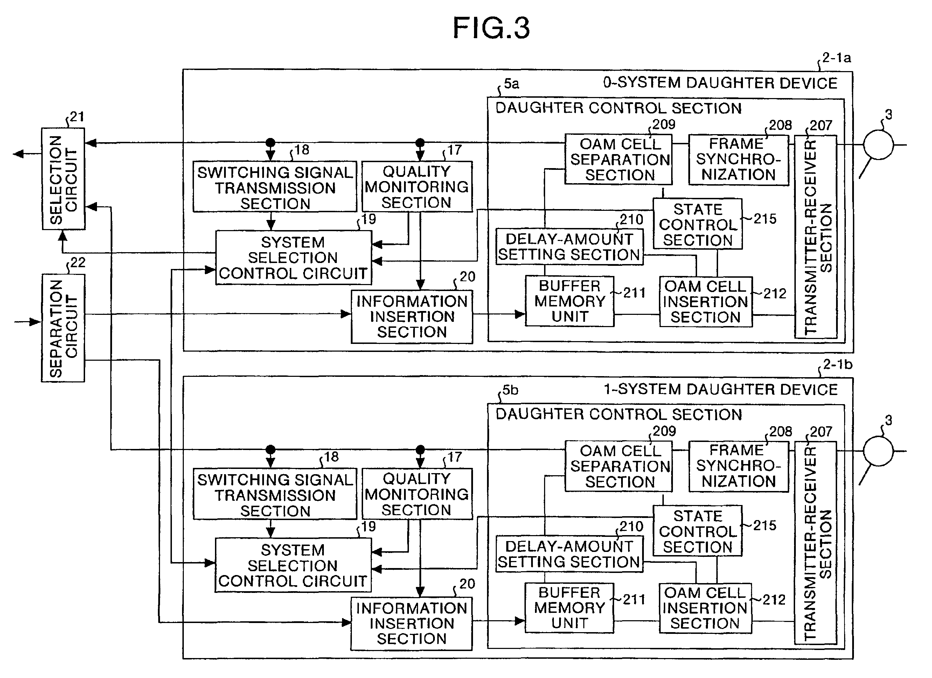

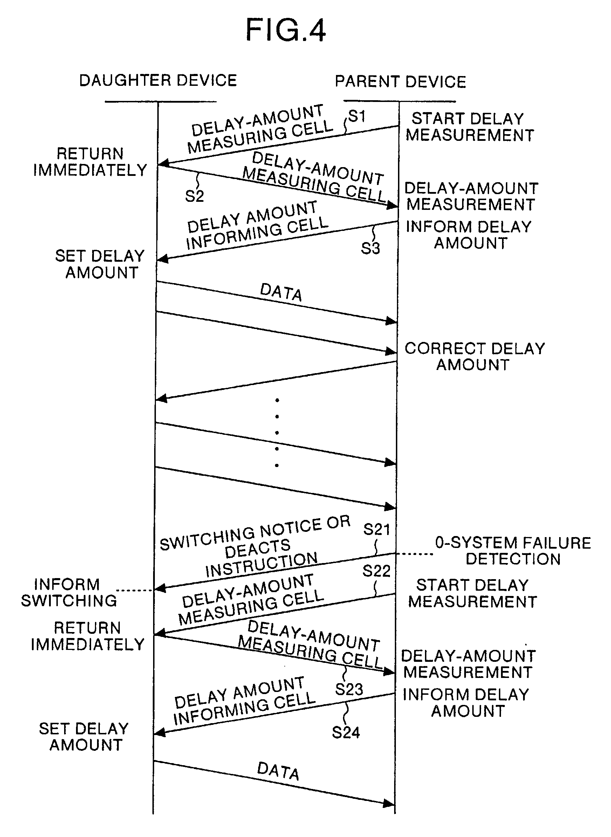

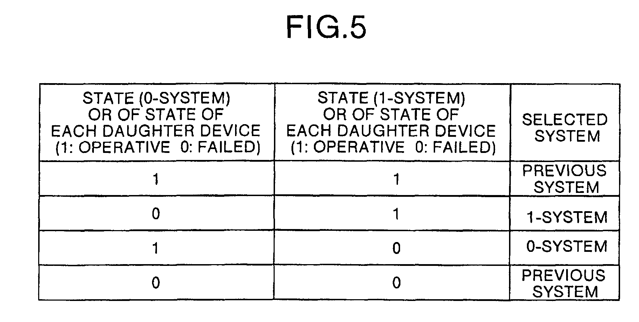

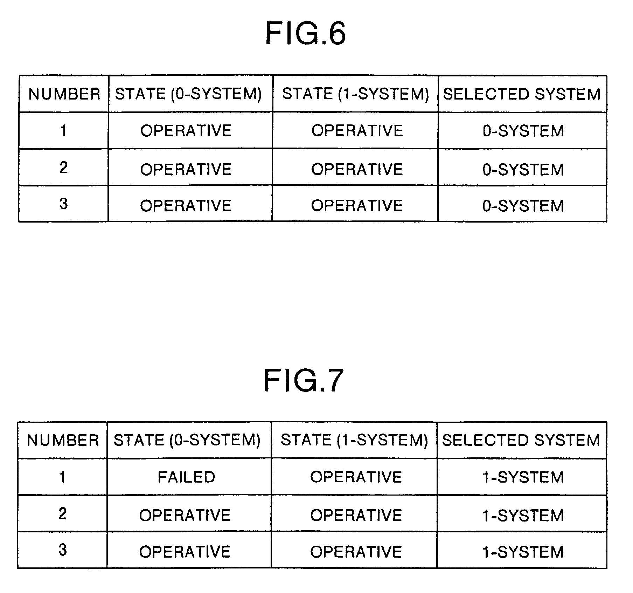

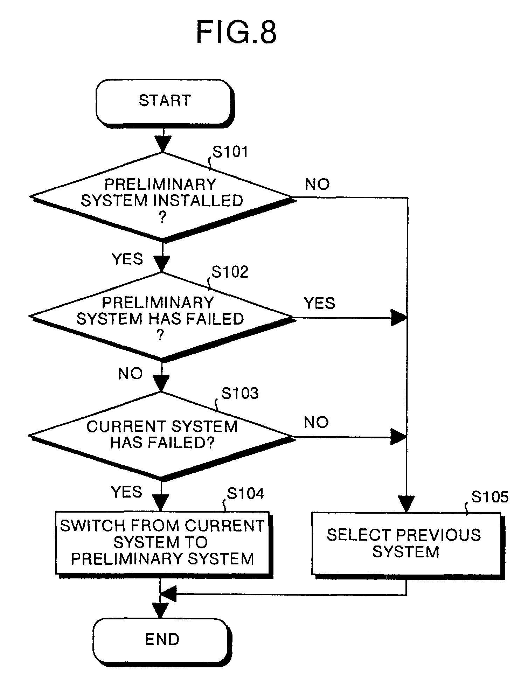

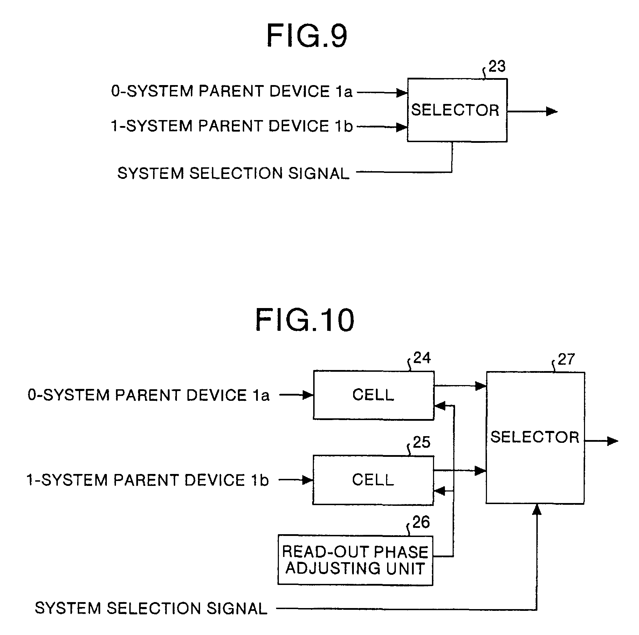

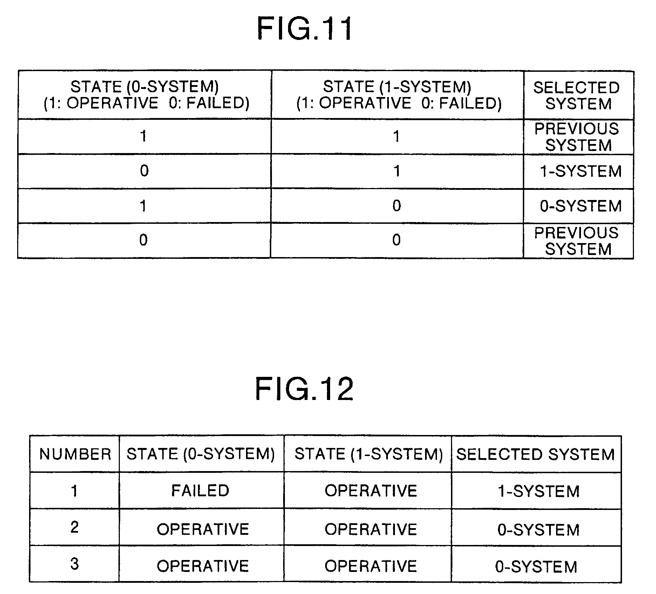

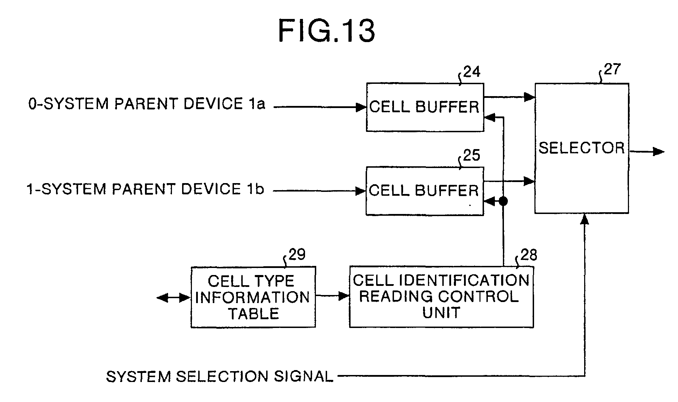

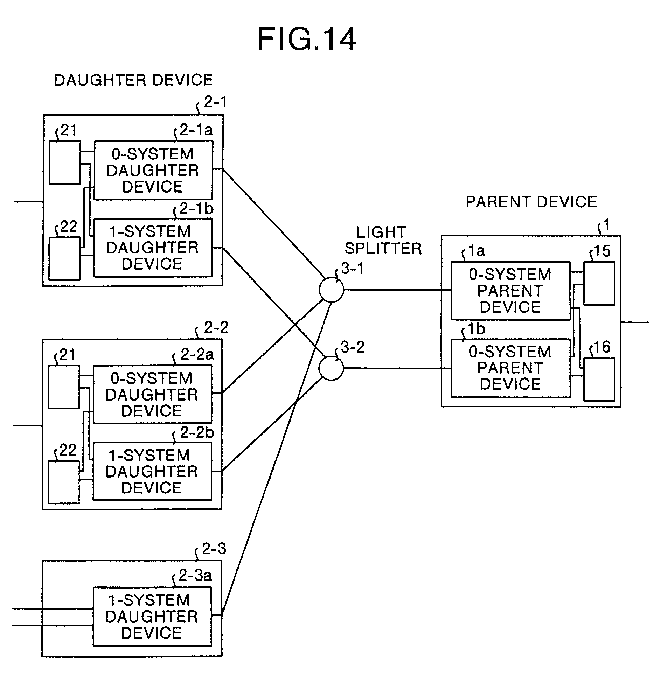

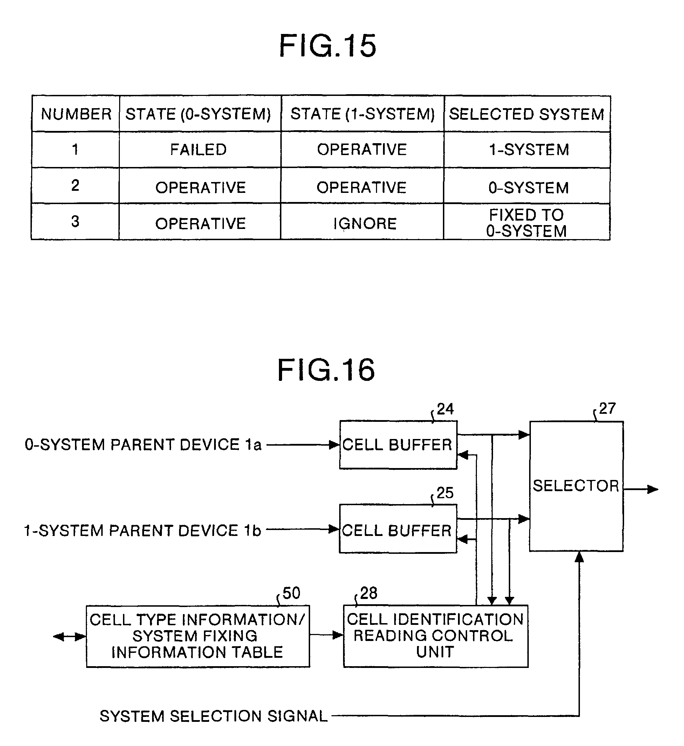

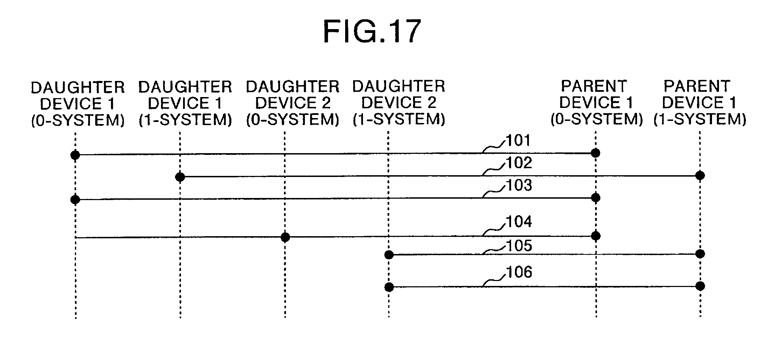

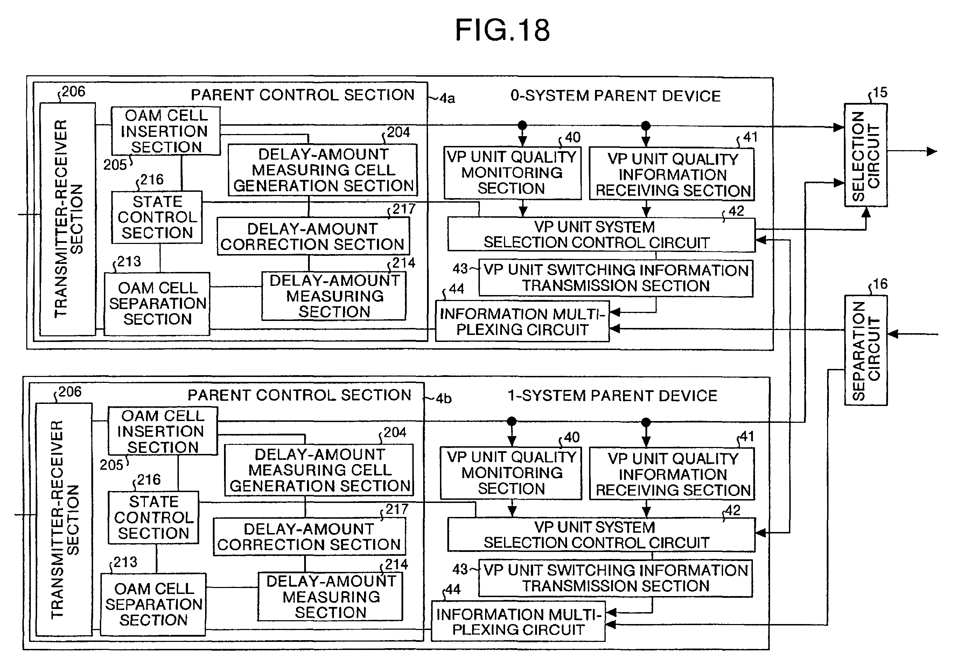

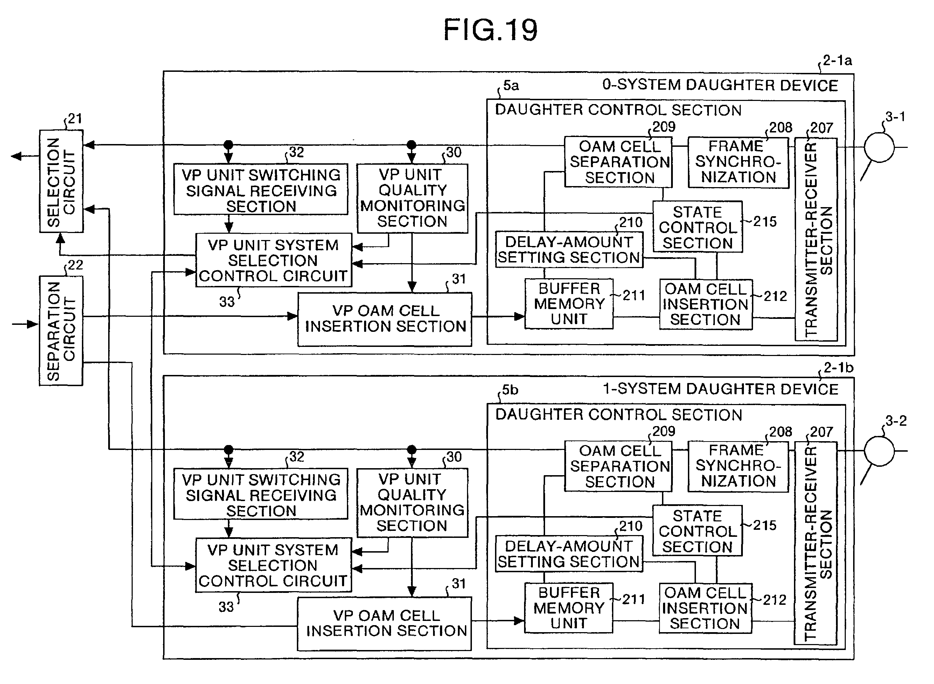

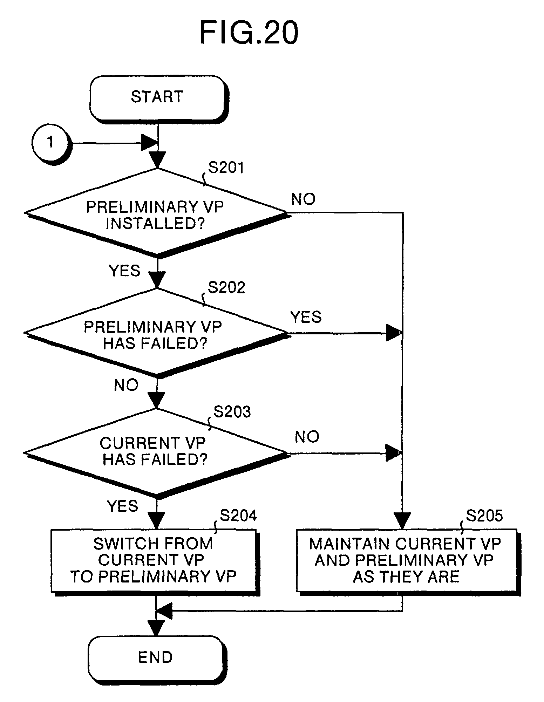

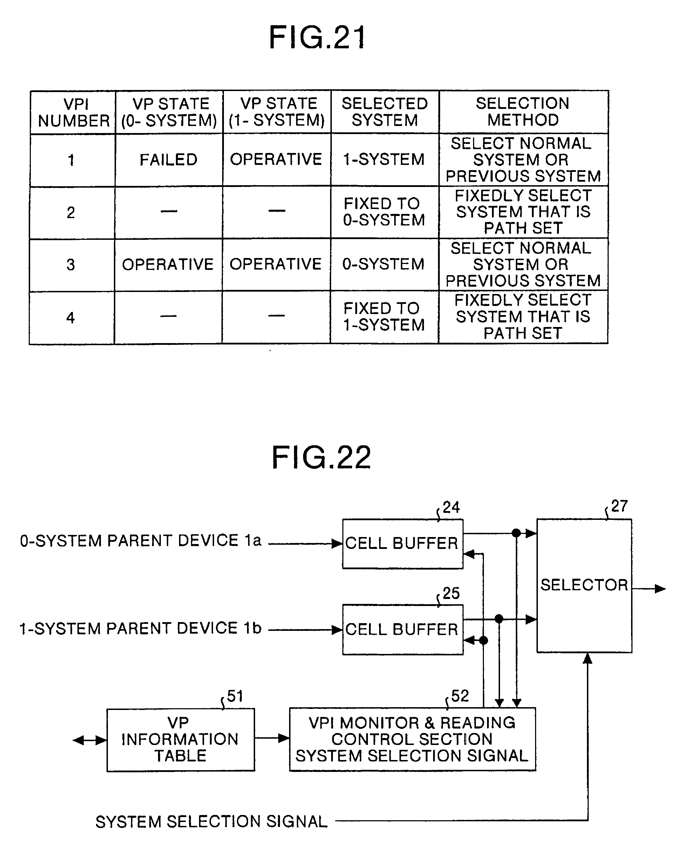

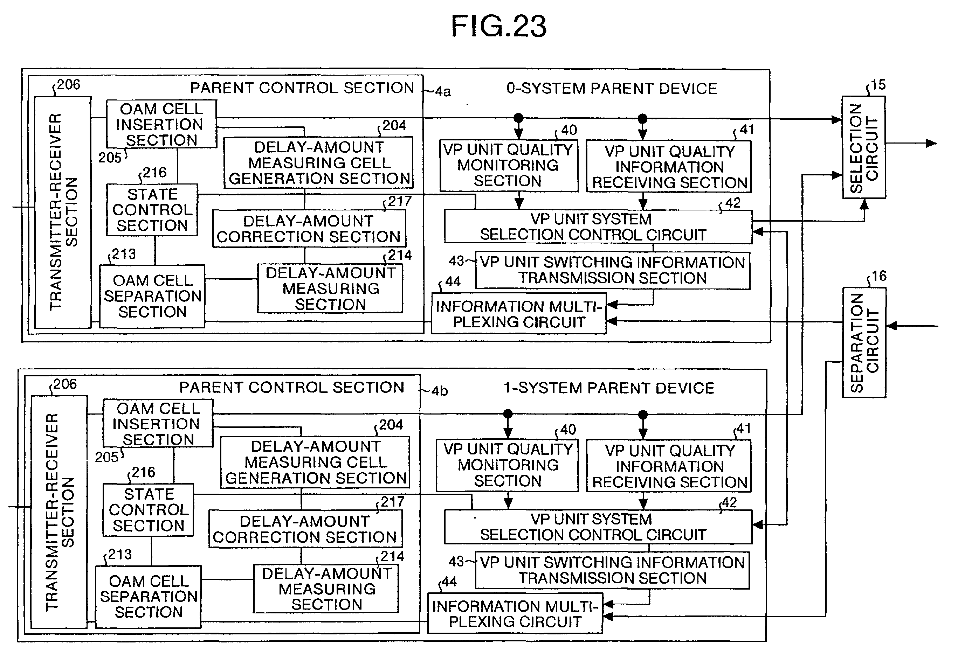

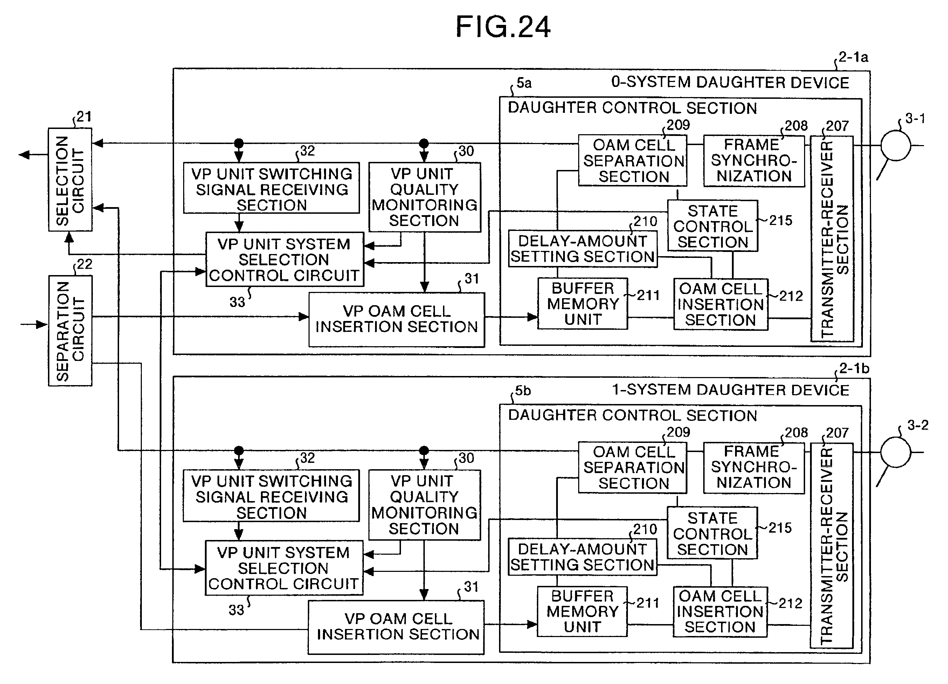

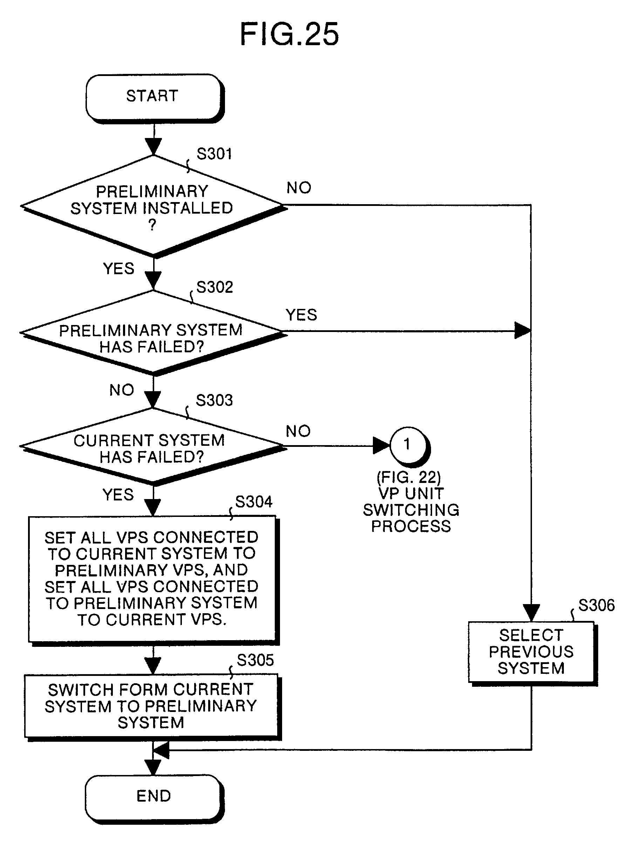

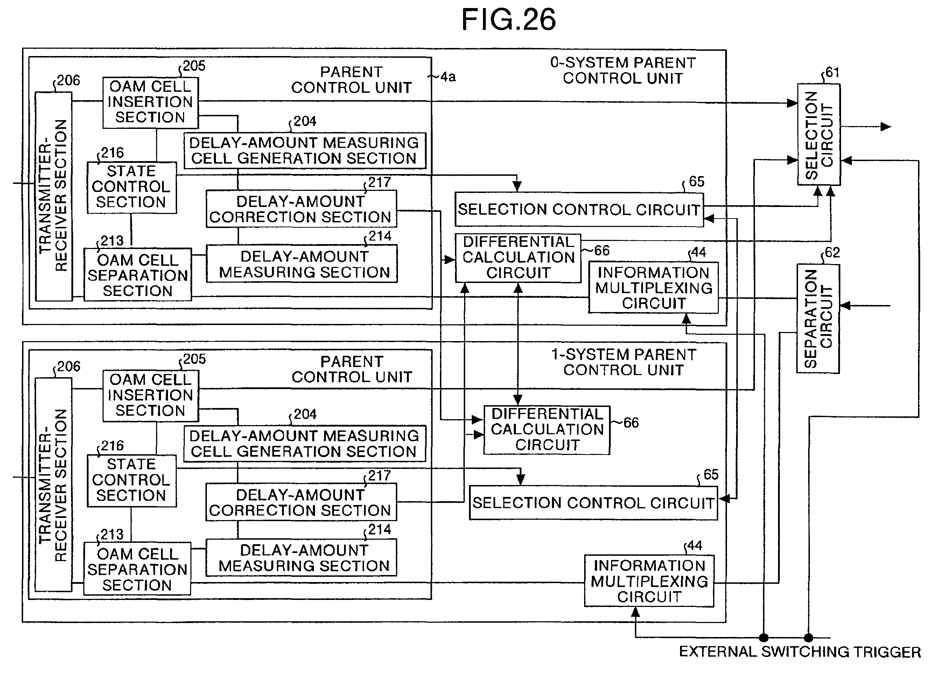

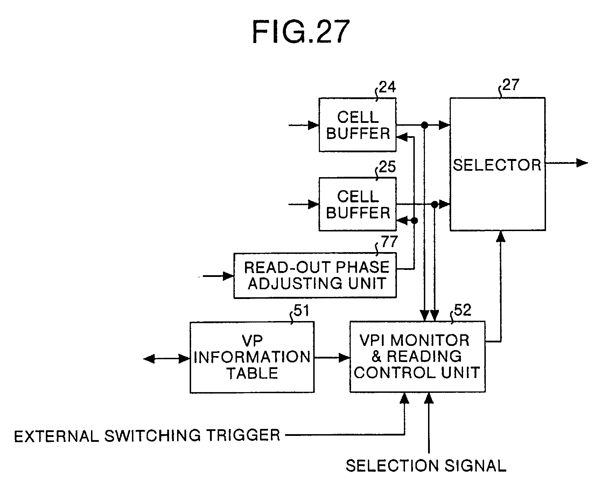

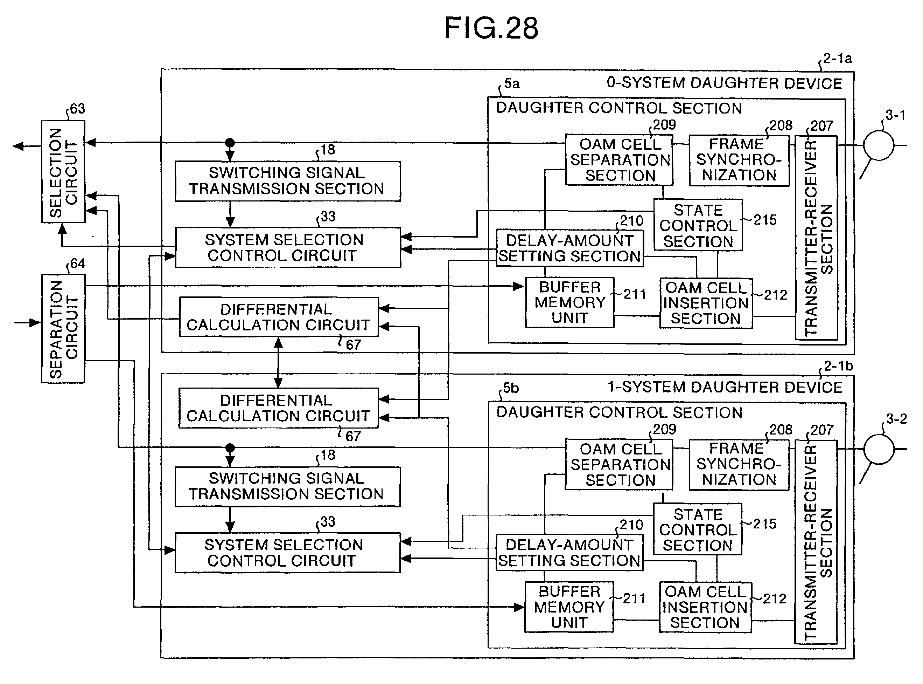

Fig. 1 is a block diagram that schematically shows a redundant optical multi-branch communication system that is a first embodiment of this invention; Fig. 2 is a block diagram that shows a detailed construction of a parent device of the redundant optical multi-branch communication system shown in Fig. 1; Fig. 3 is a block diagram that shows a detailed construction of each daughter device of the redundant optical multi-branch communication system shown in Fig. 1; Fig. 4 is a drawing that shows a sequence of delay controlling processes in the redundant optical multi-branch communication system shown in Fig. 1; Fig. 5 is a drawing that shows a system selection rule in the redundant optical multi-branch communication system that is the first embodiment of this invention; Fig. 6 is a drawing that shows one example of a state before the system selection; Fig. 7 is a drawing that shows one example of a state after the system selection; Fig. 8 is a flow chart that shows a sequence of system selection switching processes in the redundant optical multi-branch communication system that is the first embodiment of this invention; Fig. 9 is a block diagram that shows one example of a selection circuit; Fig. 10 is a block diagram that shows another example of the selection circuit; Fig. 11 is a drawing that shows a system selection rule in the redundant optical multi-branch communication system that is a second embodiment of this invention; Fig. 12 is a drawing that shows one example of a state after the system selection switching; Fig. 13 is a block diagram that shows one example of a selection circuit; Fig. 14 is a block diagram that schematically shows a redundant optical multi-branch communication system that is a third embodiment of this invention; Fig. 15 is a drawing that shows one example of a state after the system selection switching; Fig. 16 is a block diagram that shows one example of the selection circuit; Fig. 17 is a drawing that shows one example of the setting of a virtual path that is set in a redundant optical multi-branch communication system that is a forth embodiment of this invention; Fig. 18 is a block diagram that shows a detailed construction of a parent device of a redundant optical multi-branch communication system that is the forth embodiment of this invention; Fig. 19 is a block diagram that shows a detailed construction of each daughter device of the redundant optical multi-branch communication system that is the forth embodiment of this invention; Fig. 20 is a flow chart that shows a sequence of system selection switching processes of the redundant optical multi-branch communication system that is the forth embodiment of this invention; Fig. 21 is a drawing that shows one example of a state after the system selection switching; Fig. 22 is a block diagram that shows one example of the selection circuit; Fig. 23 is a block diagram that shows a detailed construction of a parent device of a redundant optical multi-branch communication system that is a fifth embodiment of this invention; Fig. 24 is a block diagram that shows a detailed construction of each daughter device of the redundant optical multi-branch communication system that is the fifth embodiment of this invention; Fig. 25 is a flow chart that shows a sequence of system selection switching processes of the redundant optical multi-branch communication system that is the fifth embodiment of this invention; Fig. 26 is a block diagram that shows a detailed construction of a parent device of a redundant optical multi-branch communication system that is a sixth embodiment of this invention; Fig. 27 is a block diagram that shows one example of the selection circuit; Fig. 28 is a block diagram that shows a detailed construction of each daughter device of the redundant optical multi-branch communication system that is the sixth embodiment of this invention; Fig. 29 is a block diagram that shows one example of the selection circuit; Fig. 30 is a block diagram that shows a schematic construction of a conventional optical multi-branch communication system; Fig. 31 is a block diagram that shows detailed constructions of a parent device and each daughter device of the optical multi-branch communication system shown in Fig. 30; and Fig. 32 is a block diagram that shows a schematic construction of a conventional redundant optical multi-branch communication system.

### BEST MODE FOR CARRYING OUT THE INVENTION

Embodiments of the redundant optical multi-branch communication system according to the present invention will be described while referring to the accompanying drawings.

### First Embodiment:

First, an explanation will be given of a first embodiment of the present invention. Fig. 1 is a block diagram that shows a schematic construction of a redundant optical multi-branch communication system that is the first embodiment of the present invention. In Fig. 1, a parent device 1 and a plurality of daughter devices 2-1 to 2-n are connected to each other by respectively different optical fibers through two light splitters 3-1 and 3-2. The light splitters 3-1, 3-2 and the parent device 1, as well as the light splitters 3-1, 3-2 and the respective daughter devices 2-1 to 2-n, are connected through one optical fiber, respectively. Between the parent device 1 and each of daughter devices 2-1 to 2-n, upward and downward light signals that are wavelength-multiplexed are transmitted through the optical fiber. The light splitters 3-1, 3-2 and the parent device 1, as well as the light splitters 3-1, 3-2 and respective daughter devices 2-1 to 2-n, are connected through one optical fiber respectively, however, respectively two optical fibers may be used so that upward and downward light signals may be transmitted through different optical fibers.

The parent device 1 is provided with 0-system parent device 1a, 1-system parent device 1b, a selection circuit 15 and a branch circuit 16. The 0-system parent device 1a and the 1-system parent device 1b are respectively connected to light splitters 3-1 and 3-2, and provided with parent control units 4a, 4b that have the same construction as the parent device 201 shown in Fig. 31. The selection circuit 15 selects either of the 0-system parent devices 1a and 1b, and carries out an output operation. The branch circuit 16 outputs an input signal to the 0-system parent device 1a and the 1-system parent device 1b respectively.

The respective daughter devices 2-1 to 2-n have 0-system daughter devices 2-1a to 2-na, 1-system parent devices 2-1b to 2-nb, a selection circuit 21 and a branch circuit 22, respectively. The 0-system daughter devices 2-1a to 2-na and 1-system daughter devices 2-1b to 2-nb are respectively connected to light splitters 3-1 and 3-2, and respectively have daughter control sections 5a, 5b that have the same construction as the daughter devices 202-1 to 202-n, shown in Fig. 31. The selection circuit 21 selects either of the 0-system daughter devices 2-1a to 2-na or the 1-system daughter devices 2-1b to 2-nb, and carries out an output operation. The branch circuit 22 respectively output an input signal to the 0-system daughter devices 2-1a to 2-na and the 1-system daughter devices 2-1b to 2-nb.

Fig. 2 is a block diagram that shows a detailed construction of the parent device 1 shown in Fig. 1. In Fig. 2, parent control units 4a, 4b, respectively possessed by the 0-system parent device 1a and 1-system parent device 1b, have the parent device 201 shown in Fig. 31 as described above, and the same constituent parts are indicated by the same reference numerals. Each of the 0-system parent device 1a and the 1-system parent device 1b has a quality monitoring section 10, a quality information receiving section 11, a system selection control circuit 12, a switching information transmission section 13 and an information multiplexing circuit 14.

The quality monitoring section 10 monitors a signal for each daughter device that is input from the OAM cell insertion section 205. The quality information receiving section 11 receives downward quality inspection information prepared for each daughter device. The system selection control circuit 12 generates a system selection signal for specifying the selection of either of the 0-system and the 1-system that have been duplexed, based upon information from a state control section 216, the quality monitoring section 10, the quality information receiving section 11 and other system selection control circuits 12. The switching information transmission section 13, which is installed in each daughter device, informs the respective daughter devices 2-1 to 2-n of the system selection signal. The information multiplexing circuit 14 multiplexes the system selection signal output from the switching information transmission section 13 and a downward main signal input from the branch circuit 16, and outputs the resulting signal to an OAM cell separation section 213.

Fig. 3 is a block diagram that shows a detailed construction of the daughter device 2-1, shown in Fig. 1. The construction of the other daughter devices 2-2 to 2-n is the same as the daughter device 2-1. As shown in Fig. 3, daughter control sections 5a and 5b, possessed by the 0-system daughter device 2-1a and the 1-system daughter device 2-1b, have the same construction as the daughter device 202-1 to 202-n, shown in Fig. 31, as described earlier. In Fig. 3, the same constituent parts are indicated by the same reference numerals as those in Fig. 31. Each of the 0-system daughter device 2-1a and the 1-system daughter device 2-1b has a quality monitoring section 17, a switching signal receiving section 18, a system selection control circuit 19 and an information insertion section 20.

The quality monitoring section 17 monitors the downward signal quality based upon parity codes within the input signal or CRC, etc. The switching signal receiving section 18 receives a switching signal within the input signal. The system selection control circuit 19 generates a system selection signal for specifying the selection of either of the 0-system and 1-system that have been duplexed, based upon information from the state control section 215, the quality monitoring section 17 and the switching signal receiving section 18. The information insertion section 20 generates information to be output from the quality monitoring section 17, and outputs the resulting information to the buffer memory section 211 so as to transmit the information to the parent device 1.

Referring to a flow chart shown in Fig. 4, an explanation will be given of a delay control process and a failure recovering process between the parent device 1 and the daughter devices 2-1 to 2-n. First, upon connection of the optical fiber and application of power supply, the parent device 1 transmits a delay-amount measuring cell to one of the daughter devices 2-1 to 2-n (S1). The one of the daughter devices 2-1 to 2-n immediately returns this delay-amount measuring cell to the parent device 1 (S2). The delay-amount measuring section 214 of the parent device 1 measures the round trip time of the cell from the parent device 1 returning again to the parent device 1 via one of the daughter devices 2-1 to 2-n, and measures the delay amount based upon this round trip time, and transmits information of the delay amount to one of the daughter devices 2-1 to 2-n as a delay-amount informing cell (S3). One of the delay-amount setting sections 210 of the daughter devices 2-1 to 2-n, received this delay-amount informing cell, re-sets the delay amount of the cell. When the cell is returned within a normal range, the state control section 216 determines this as an operable state, and thereafter, the delay amount measuring section 214 measures the delay amount of the cell, while the delay-amount correction section 217 finely adjusts the delay amount based upon the result of the measurement. In contract, if the delay amount of the cell exceeds a predetermined correction range, the state control section 216 determines this as an abnormal state, and if the transmitter-receiver section 206 fails to receive a normal signal, also determines this as an abnormal state. This process is carried out successively, while the number of the daughter devices 2-1 to 2-n is being changed.

When the state control section 216 determines a circuit to one daughter device as an abnormal state, that is, a failure is detected in the currently selected 0-system, the parent device 1 informs one of the daughter devices 2-1 to 2-n of the switching to the 1-system (S21). Moreover, the parent device 1 starts to measure a delay and transmits the delay-amount measuring cell to one of the daughter devices 2-1 to 2-n so as to measure the round trip time (S22, S23). Then, the parent device 1 transmits the result of this delay-amount measurement to one of the daughter devices 2-1 to 2-n as a delay-amount informing cell (S24) so that one of the daughter devices 2-1 to 2-n re-sets the amount of delay based upon this information.

The quality monitoring section 10 monitors the quality based upon monitoring information, such as identifying information and parity codes, embedded for each daughter device so as to confirm the normal state of information transmission from each daughter device. Moreover, the quality monitoring section 17 monitors the quality based upon monitoring information such as identifying information and parities embedded in packets so as to carry out inspection for the normality of the downward line. The result of this inspection is output to the information insertion section 20, and the information insertion section 20 outputs this to the parent device 1 as an upward monitoring cell. The quality information receiving section 11 receives this monitoring cell, and transfers this to the system selection control circuit 12. The system selection control circuit 12 determines the system selection based upon the quality information within the monitoring cell.

The system selection control circuit 12 selects the selection system according to the selection rule shown in Fig. 5. In the selection rule shown in Fig. 5, if all the daughter devices of either the 0-system or 1-system are in an operable state, the corresponding system in the operable state is selected. Moreover, at least one daughter device is in an abnormal state in either of the system or if at least one daughter device is in an abnormal state in both of the system, the former system is maintained.

For example, as shown in Fig. 6, it is supposed that three daughter devices 2-1 to 2-3 having numbers "1" to "3" are registered, that the 0-system and 1-system are all operated, and that all the daughter devices 2-1 to 2-3 select the 0-system. If, as shown in Fig. 7, the daughter device 2-1 having the number "1" is detected as an abnormal state, all the system selection of the numbers "1" to "3" is set in the 1-system. In other words, the system selection control circuit 12 determines the system selection of all the daughter devices 2-1 to 2-n as either the 0-system or the 1-system.

Referring to a flow chart shown in Fig. 8, an explanation will be given of a sequence of a system selection control process of the system selection control circuit 12. First, the system selection control circuit 12 makes a determination as to whether the preliminary system is installed (step S101). If the preliminary system is installed (Yes at step S101), a determination is made as to whether the preliminary system is abnormal (step S102). If the preliminary system is not abnormal (No at step S102), then a determination is further made as to whether the current system is abnormal (step S103). If the current system is abnormal (Yes at step S103), the current system is switched to the preliminary system (step S104). Thus, for example, the 0-system and the 1-system are switched to each other, thereby completing the present process. In contrast, if the preliminary system is not installed (No at step S101), if the preliminary system is abnormal (Yes at step S103), or if the current system is not abnormal (No at step S103), the previous system is selected (step S105), thereby completing the present process.

The system selection signal, output from the system selection control circuit 12, is output to the selection circuit 15 so that the upward light signal is selected. In other words, based upon the selection system indicated by the system selection signal, the selection circuit 15 selects either a signal output from 0-system parent device 1a or a signal output from 1-system parent device 1b.

In contrast, the system selection control circuit 12 output a system selection signal to the switching information transmission section 13, and the switching information transmission section 13 outputs the resulting signal to the information multiplexing circuit 14 as a switching signal. The information multiplexing circuit 14 time-division-multiplexes this switching signal, and simultaneously transfers this to the respective daughter devices 2-1 to 2-n. The daughter devices 2-1 to 2-n receive the switching signal in the switching signal receiving units 18, and outputs the resulting signal to the system selection control circuit 19. Based upon the switching signal, the system selection control circuit 19 generates a system selection signal, outputs this to the selection circuit 21 so that the downward signal is selected. In other words, based upon the selected system specified by the system selection signal, the selection circuit 21 selects a signal output from either the 0-system daughter device 2-1a or the 1-system daughter device 2-1b.

Regarding the transfer route of the switching signal, the same signal is normally transferred to both of the system of 0-system and 1-system, with the result that the switching signal, received by the system forming the preliminary system, is selected. With this arrangement, when the transfer system of the switching signal itself becomes abnormal, failing to transfer a signal, no switching occurs. Thus, this makes it possible to achieve the same state transition as the selection rule shown in Fig. 5 in which in the case of an abnormal state of the preliminary system, no switching occurs.

Fig. 9 is a block diagram that shows one example of a detailed construction of the selection circuit 15. As shown in Fig. 9, the selection circuit 15 is achieved by a selector 23 with two-inputs and one output. For example, to the selection circuit selector 23, signals from the 0-system parent device 1a and the 1-system parent device 1b are input, and either of the signals is selected and output by the system selection signal. The selection circuit 21 is also achieved by the same construction.

Moreover, Fig. 10 is a block diagram that shows another example of a detailed construction of the selection circuit 15. As shown in Fig. 10, in the selection circuit 15, a selector 27 with two inputs and one output is installed, and cell buffers 24 and 25, achieved by FIFO circuits, etc., are respectively interpolated between the selector 27 and the 0-system parent device 1a and the 1-system parent device 1b. Moreover, a read-out phase adjusting section 26, achieved by a counter circuit, is installed so that the leading phases of the packets of the respective system read from the cell buffer 24, 25 are made coincident with each other. A system selection signal is input into the selector 27 and either the signal of the 0-system or the signal of the 1-system is selected and output. Moreover, the selection circuit 21 is also achieved by the same construction.

According to the first embodiment, the system switching between the 0-system and 1-system is quickly carried out, and only when a normal preliminary system exists, switching is made to this preliminary system. Thus, it is possible to achieve a positive system switching operation.

### Second Embodiment:

Next, a second embodiment of the present invention will be explained. In the first embodiment, if either one of the links between the parent device 1 and the daughter devices 2-1 to 2-n becomes abnormal, all the links corresponding to the daughter devices 2-1 to 2-n are switched to the preliminary system. On the other hand, in the second embodiment, switching is made on the basis of the daughter devices 2-1 to 2-n.

The system construction of the second embodiment is the same as the redundant optical multi-branch communication system of the first embodiment shown in Figs. 1 through 3, however, the control operation by the system selection control circuit 12 is different. In other words, in the second embodiment, a system selection is performed according to a selection rule shown in Fig. 11 so that a system selection is carried out on the basis of each of the daughter devices 2-1 to 2-n depending on whether or not the operation state of each of the daughter devices 2-1 to 2-n is abnormal.

For example, as shown in Fig. 12, if, with respect to three daughter devices 2-1 to 2-3 of numbers "1" to "3", the 0-system is selected as the current system as to all the initial states, and the 0-system of the daughter device 2-1 of number "1" fails with all the other daughter devices are operable, only the daughter device 2-1 having number "1" is switched from the 0-system to the 1-system with the 1-system being switched to the current system, and the other daughter devices 2-2, 2-3 are allowed to maintain the 0-system, as it is, as the current system.

The construction of the selection circuit 15 in this case is achieved by a construction shown in Fig. 13. Identification numbers are assigned to the packets to be transmitted and received so as to be identified for each of the daughter devices, and each identification number and information corresponding to this identification number, that is, information of the current system, are preliminarily set on a cell type information table 29 in association with each other. System switching information indicating which system, the 0-system or the 1-system, is used as the current system is output from the cell type information table 29 to the cell identification reading control section 28 for each of daughter devices 2-1 to 2-n so that the cell identification reading control section 28 selects either the cell buffer 24 or 25 as the buffer to be read based upon the system switching information. In other words, the cell identification reading control section 28 controls with the cell buffer to be read being varied for each cell type. A system selection signal is input to the selector 27.

The switching information transmission section 13 generates a switching control signal for each of the daughter device 2-1 to 2-n in response to the system selection signal by the system selection control circuit 12, and this is transmitted to the daughter devices 2-1 to 2-n through the information multiplexing circuit 14. In each of the daughter devices 2-1 to 2-n, the switching signal receiving section 18 receives a switching control signal corresponding to each of the daughter devices 2-1 to 2-n, and outputs the switching control signal to the system selection control circuit 19. Thereafter, the output switching is controlled by the selection circuit in the same manner as the first embodiment.

According to the second embodiment, the system switching control is carried out for each of the daughter devices 2-1 to 2-n in response to the state of each of the daughter devices 2-1 to 2-n, therefore, for example, if a failure occurs in an optical fiber between the light splitters 3-1, 3-2 and the respective daughter devices 2-1 to 2-n, only the system having an abnormal state can be switched with the currently operating system in the other daughter devices that are carrying out normal operations are maintained as they are . Thus, the other daughter devices carrying out normal communications are not forcefully subjected to system switching, consequently, it is possible to prevent hit caused by a system switching operation.

### Third Embodiment:

The following description will discuss a third embodiment of the present invention. The respective daughter devices 2-1 to 2-n in the first and second embodiments are all duplexed, however, in the third embodiment, the daughter devices with in the daughter devices 2-1 to 2-n are allowed to communicate by using only one of the 0-system and 1-system.

Fig. 14 is a block diagram that shows a construction of a redundant optical multi-branch communication system that is the third embodiment of the present invention. In Fig. 14, three daughter devices 2-1 to 2-3 are prepared. The daughter devices 2-1 and 2-2, which have a duplex construction in the same manner as the first and second embodiments, are respectively connected to light splitters 3-1 and 3-2, however, the daughter device 2-3 does not have a duplex construction, and connected to only the light splitter 3-1 of the 0-system. The other construction is the same as those of the first and second embodiments.

In this case, the system selection control circuit 12 carries out a system selection for selecting system according to selection rules shown in Fig. 15. In Fig. 15, the 0-system is selected as the initial state, and when any failure occurs in the 0-system of the daughter device 2-1 of number "1", the controlling operation is carried out so as to switch the system of all the other daughter devices 2-3 to the 1-system, however, the daughter device 2-3 has no duplex construction, and has only the 0-system used therein. Thus, the 1-system is set to an ignored state. In other words, the daughter device 2-3 is always fixed to have the 0-system as the selected system.

In this case, the selection circuit 15 is realized by a construction shown in Fig. 16. The construction of the selection circuit 15, shown in Fig. 16, is the same as the selection circuit 15 shown in Fig. 13 except that in place of the cell type information table 29, a cell type information/system fixed information table 50 is placed. In this cell type information/system fixed information table 50, information indicating that the daughter device 2-3 is fixed to the 0-system is preliminarily set. Based upon the contents set in the cell type information/system fixed information table 50, the cell identification reading control section 28 controls so that a reading operation is carried out with the packet transmitted from the daughter device 2-3 being fixed to the 0-system.

According to the third embodiment, even if all the daughter devices do not have a duplex construction with single daughter devices being mixedly placed, the duplex daughter devices can be properly system-switched, thereby making it possible to provide a flexible system.

### Forth Embodiment:

Next, an explanation will be given of a forth embodiment of the present invention. In the first to third embodiments, the system-switching is carried out by monitoring the delay-control state for each daughter device and the quality of a signal transmitted from each daughter device . However, in the forth embodiment, a plurality of virtual paths (VP) are set between the respective daughter devices and the parent device so that the quality is monitored for each VP so as to carry out the VP switching.

Fig. 17 is a drawing that shows one example of the VP setting between two daughter devices (daughter devices "1", "2") and a parent device (parent device) . In Fig. 17, black circles indicate the generation point of VP and the terminal point thereof. For example, with respect to a virtual path identifier (VPI) "1", both of the 0-system and 1-system are set (101, 102 in Fig. 17), while with respect to a VPI "2", only the 0-system is set (103 in Fig. 17). These VPI's "1" and "2" are VPI's set between the daughter device "1" and the parent device. With respect to the VPI "1", the 0-system and the 1-system are set in a duplex manner, it is possible to carry out a path-switching control.

Fig. 18 is a block diagram that shows a construction of a parent device in a redundant optical multi-branch communication system that is the forth embodiment of the present invention. Moreover, Fig. 19 is a drawing that shows a construction of each daughter device in the redundant optical multi-branch communication system that is the forth embodiment of the present invention. In Fig. 18 and Fig. 19, parent control units 4a, 4b and daughter control sections 2-1a, 2-1b have the same constructions as shown in Fig. 2 and Fig. 3, and the same constituent parts are indicated by the same reference numerals.

A VP unit quality monitoring section 40 monitors the signal quality for each VP by means of parity check or CRC check, etc., with respect to an upward light signal transmitted from each of the daughter devices 2-1 to 2-n for each VP so that a check is made as to VPs having poor quality. In contrast, with respect to the downward light signal from the parent device 1 to the daughter devices 2-1 to 2-n, a quality-monitoring process is carried out by a VP unit quality monitoring section 30, and the results of the quality inspection is converted to an upward information informing cell in a VPOAM cell insertion section 31, and this is transmitted to the parent device 1.

Quality information (VP unit quality information) of VPs having poor quality among downward light signals detected in the daughter devices 2-1 to 2-n are received by a VP unit quality information receiving section 41. A VP unit system selection control circuit 42 carries out a process for selecting an appropriate system of VP based upon the results of the quality inspection of the upward light signals monitored by the VP unit quality monitoring section 40 and the results of the quality inspection of the downward light signals received by the VP unit quality information receiving section 41.

Fig. 20 is a flow chart that shows a sequence of VP selection processes by the VP unit system selection control circuit 42. In Fig. 20, first, the VP unit system selection control circuit 42 makes a determination as to whether a preliminary VP is set (step S201). The setting of the preliminary VP means that the path of VP is set in a duplex manner as indicated by, for example, VPI "1". When the preliminary VP is set (YES in step S201), a determination is further made as to whether the preliminary VP is abnormal (step S202). When the preliminary VP is not abnormal (NO at step S202), a determination is further made as to whether the current VP is abnormal (step S203).

If the current VP is abnormal (YES at step S203), the current VP and the preliminary VP are replaced with each other (step S204), thereby completing the present process. In contrast, if no preliminary VP is set (NO at step S201), in both of the cases where the preliminary VP is abnormal (YES at step S202) and where the current VP is not abnormal (NO at step 203), the current VP and the preliminary VP are maintained as they are (step S205), that is, no VP switching is carried out, thereby completing the present process.

This process makes it possible to determine which one of VPs set in a duplex manner is the current VP. With respect to the contents of the switching control of VP thus determined, the VP unit switching control signal transmission section 43 generates VP unit switching control signals, and these are transmitted to the daughter devices 2-1 to 2-n on a VP basis through the information multiplexing circuit 44.

Fig. 21 shows the contents of specific switching control related to the VP setting shown in Fig. 17. In Fig. 21, with respect to VPI "4", since only VP of the 1-system is set, the selected system is fixedly determined as one system. Moreover, with respect to VPI "1", since VP of the 0-system is abnormal, the selected system is determined as normal VP of the 1-system.

Referring to Fig. 22, an explanation will be given of a detailed construction of the selection circuit 15. In Fig. 22, information indicating which system each VP corresponding to each VPI number is set to have, the 0-system or 1-system, is provided in a VP information table 51. When the switching information of each VP is input to a VPI monitor & reading control section 52 from the VP unit system selection control section 42, the VPI monitor & reading control section 52 provides control as to which cell buffer 24 or 25 corresponding to each VP is read so that the corresponding cell of VP is read through the selector 27.

In the daughter devices 2-1 to 2-n, the system number of VP to be read is received for each VP is received in the VP unit switching signal receiving section 32 so that the selection circuit 21 is controlled through the VP unit system selection control circuit 33. The construction of the selection circuit 21 is the same as the construction of the selection circuit 15 shown in Fig. 22.

According to the forth embodiment, since the system switching is carried out on a VP basis, it is possible to provide a flexible system, and even if daughter devices that are not duplexed are located in a mixed manner, only the system switching of the duplex daughter devices can be carried out. Thus, it is possible to construct a flexible system.

### Fifth Embodiment:

Next, an explanation will be given of a fifth embodiment of the present invention. In the forth embodiment, the system is switched for each duplex VP, however, in the fifth embodiment, system is switched with the results of the delay control being incorporated therein.

Fig. 23 is a block diagram that shows a construction of a parent device in a redundant optical multi-branch communication system that is the fifth embodiment of the present invention. Moreover, Fig. 24 is a drawing that shows a construction of each daughter device in the redundant optical multi-branch communication system that is a sixth embodiment of the present invention. In the parent device 1 according to the fifth embodiment, the results of delay control by the state control section 216 are input to the VP unit system selection control circuit 42. Moreover, in the daughter devices 2-1 to 2-n, the results of delay control by the state control section 215 are input to the VP unit system selection control circuit 33. For this reason, the contents of control of the VP unit system selection control circuits 33 and 42 are distinct from the VP unit system selection control circuits 33 and 42 shown in the forth embodiment. The other constructions are the same as those of the forth embodiment, and the same constituent parts are indicated by the same reference numerals.

Fig. 25 is a flow chart that shows a sequence of control processes in the VP unit system selection control circuits 33 and 42 shown in Figs. 23 and 24. In Fig. 25, first, the VP unit system selection control circuit 42 makes a determination as to whether a preliminary VP is set (step S301). When the preliminary VP is set (YES in step S301), a determination is further made as to whether the preliminary system is abnormal (step S302). If the preliminary system is not abnormal (NO at step S302), a determination is further made as to whether the current system is abnormal (step S303).

If the current system is abnormal (YES at step S303), the current VPs are all set to the preliminary VPs while the preliminary VPs are all set to the current VPs (step S304). Thereafter, those devices of the current system and the preliminary system are replaced with each other (step S305), thereby completing the present process. In other words, the system switching is carried out on a daughter device basis.

When no preliminary system is installed (NO at step S301) as well as if the preliminary system is abnormal (YES at step S302), the preceding system is selected (step S306), thereby completing the present process.

Moreover, if the current system is not abnormal (NO at step S303), the process of Fig. 20, that is, the system switching on a VP basis, is carried through a connector element "1". In other words, if, as the result of the state monitoring process by the delay control, both of the current system and the preliminary system are normal, the VP switching is carried out, and if the current system is abnormal while the preliminary system is normal, the switching process is carried out on a daughter basis.

According to the fifth embodiment, even in the event of a failure in an optical fiber with an increase in the number of VP settings, many switching operations in VPs thus set tend to occur, resulting in a great amount of time in the switching control, however, since the switching for each daughter device and the VP switching are carried out, no concentration occurs in the VP switching control, and even in the event of a disconnection in an optical fiber, the switching time can be shortened.

### Sixth Embodiment:

Next, an explanation will be given of a sixth embodiment of the present invention. In any of the first to fifth embodiments, a hit occurs at the time of switching. However, in the sixth embodiment, the difference in the delay amount at the time of switching is calculated, and by using this delay-amount information, it is possible to prevent any hit at the time of switching.

Fig. 26 is a block diagram that shows a construction of a parent device in a redundant optical multi-branch communication system that is the sixth embodiment of the present invention. In Fig. 26, the parent control units 4a, 4b have the same construction as the first embodiment. A delay-amount measuring section 214 measures the reciprocal delay amount, and outputs the results of measurement to two differential calculation circuits 66. Moreover, the results of measurement from other system are also input to the differential calculation circuits 66. In other words, the results of measurement of the 0-system and the 1-system are input to the differential calculation circuit 66 so that the differential calculation circuit 66 calculates a difference between the delay amounts of the 0-system and the 1-system. By using this difference between the delay amounts, it is possible to find the delay difference information between the 0-system and 1-system in the upward direction. The differential calculation circuit 66 outputs the delay difference information to the selection circuit 61.

The selection circuit 61 is realized by a construction shown in Fig. 27. In Fig. 27, the delay difference information output from the differential calculation circuit 66 is input to a reading phase adjusting section 77. Based upon the delay-difference information, if the upward delay difference of the 0-system is greater, the reading phase adjusting section 77 stores information of the cell buffer 25 of the 1-system in a packet as much as the amount corresponding to the delay-difference information. That is, it is delayed so that the phases of packets to be read are made coincident with each other.

In the parent device, an external switching trigger is input from outside, and if the switching is made by using this external switching trigger, the system switching can be carried out without causing any hit. Moreover, in the case of a normal switching operation due to a failure, the switching is made by a signal input from the selection control circuit 65 so that, although a hit occurs until the failure has been detected, it is possible to minimize the switching time.

Fig. 28 is a block diagram that shows a construction of each daughter device in the redundant optical multi-branch communication system that is the sixth embodiment of the present invention. In Fig. 28, daughter control devices 5a, 5b have the same construction as the first embodiment. The delay-amount setting section 210 outputs a delay amount set in each daughter device to the differential calculation circuits 67 of the 0-system and 1-system. In the same manner as the differential calculation circuit 66 in the parent device, the delay-amounts of the 0-system and 1-system are input to the differential calculation circuits 67, and the differential calculation circuits 67 calculate delay-difference information between the 0-system and the 1-system, and output this delay-difference information to the selection circuit 63.

The selection circuit 63 is realized by a construction shown in Fig. 29. In Fig. 29, delay-difference information, output from the differential calculation circuit 67, is input to a reading phase adjusting section 78. Based upon the delay-difference information, the reading phase adjusting section 78 carries out a reading control operation on the cell buffers 24, 25 so that the cell buffers 24, 25 in the system that has less delay amount can store information corresponding to this delay amount. Thus, the reading phases of the buffer memory units within the cell buffers 24, 25 are made coincident with each other. Further, when a system selection control signal is input, the selector 27 is controlled so that the system is switched.

The external switching trigger from the parent device is multiplexed in the information multiplexing circuit 44, inserted as information, and transferred to the daughter devices. The switching signal receiving section 18 receives information of the external switching trigger, and outputs to the system selection control circuit 33. By receiving this signal, the system unit control circuit 33 outputs a system-switching control signal to the selection circuit 63. Thus, in the daughter devices also, the selection circuit 63 forcefully carries out the system switching without any hit.

According to the sixth embodiment, the differential calculation circuits 66, 67 calculate delay-difference information, and based upon the results of calculation, the reading phases of the cells are made coincident with each other. Thus, if the system switching is carried out by using the external switching trigger, it is possible to carry out the system switching without any hit, and in the case of the switching caused by a normal failure also, it is possible to switch by the signal input from the selection control circuit 65. Thus, although a hit occurs until the failure has been detected, it is possible to minimize the switching time.

As described above, according to one aspect of the present invention, the delay control unit controls the respective delay amounts on the optical network of the current-system and the preliminary system, and based upon the results of the delay control by the delay control unit, the selection switching control unit selectively switches to an appropriate optical network of the current-system and the preliminary system optical networks. Therefore, even in a system in which a parent device of a redundant construction and a plurality of daughter devices, each having a redundant construction, are connected through a current-system optical network and a preliminary system network, it is possible to selectively switch to an appropriate optical network, and consequently to provide a system having high reliability.

Furthermore, if at least one daughter device on the optical network of the current-system or the preliminary system has failed, the selection switching control unit carries out the control operation so that the plurality of daughter devices are selectively switched to another optical network that has no failure. Therefore, it is possible to execute a redundant switching operation quickly with high reliability.

Moreover, based upon the results of delay control of the delay control unit, the selection switching control unit carries out the control operation so that the switching is selectively made to the optical network of the current-system or preliminary system. Therefore, it is possible to execute a flexible redundant switching operation with high reliability.

Furthermore, the table stores the first identifying information of each daughter device that has been preliminarily set and second identifying information that is information sent from each daughter device in association with each other, and on the parent device, the buffers temporarily store information input through the optical network of the current-system or the preliminary system, and the selective reading control unit identify a transmission end of information input from the optical networks of the current-system and the preliminary system by reference to the corresponding relationship on the table and controls a reading operation from the buffer corresponding to the transmission end. Therefore, it is possible to execute a redundant switching operation with high reliability.

Moreover, based upon the result of the delay control of the delay control unit, each of the plurality of daughter devices determines an optical network to which switching is made by the selection switching control unit based upon the result of the delay control of the delay control unit. Therefore, it is possible to flexibly carry out a redundant switching operation with high reliability.

Furthermore, the parent device preliminarily determines an optical network to which selection switching is made by the selection switching control unit for each of the daughter devices, and informs each of the daughter devices of the determined network to which selective switching is made, and each of the daughter devices determines the network to which selective switching is made by the selection switching control unit, based upon the network for selective switching informed by the parent device. Therefore, it is possible to flexibly carry out a redundant switching operation with high reliability.

Furthermore, the quality monitoring section inspects quality on the virtual path basis, and the selection switching control unit selectively switches to an appropriate virtual path based upon the results of the quality inspection on the virtual path basis made by the quality monitoring section. Thus, it becomes possible to provide a flexible redundant construction, and also to form a system having high reliability.

Moreover, the delay control unit controls each of the delay amounts on the optical networks of the current-system and preliminary system, and the selection switching control unit carries out a switching control on the virtual path basis when the result of delay control of the delay control unit is within a predetermined delay amount. Thus, it becomes possible to flexibly form a system having higher reliability.

Furthermore, the delay difference calculation unit finds each of delay differences between the optical networks of the current-systemandpreliminary system, and calculates delay difference information between the optical networks based upon the respective delay differences, and the selective control unit delays information from the optical network the delay difference of which is small. Therefore, it becomes possible to achieve a redundant switching operation with higher reliability.

Moreover, the selection switching control unit forcefully carries out a switching operation by using an external switching trigger so that a redundant switching operation without causing any hit. Thus, it is possible to positively carry out a redundant switching operation without any hit.

In addition, some daughter devices of the plurality of daughter devices have a non-redundant construction. Therefore, it is possible to form a flexible system.

### INDUSTRIAL APPLICABILITY

As described above, the redundant optical multi-branch communication system according to the present invention is related to an optical communication system, and in particular suitable for redundant optical multi-branch communication in which a parent device having a redundant construction and a plurality of daughter devices, each having a redundant construction, are connected to each other through an optical network of a current-system and an optical network of a preliminary system.

## Claims

1. An optical multi-branch communication system comprising:
a parent device having a redundant construction;
a plurality of daughter devices, each having a redundant construction;
a current-system optical network that connects said parent device and said daughter devices;
a preliminary system optical network that connects said parent device and said daughter devices;
a delay controlling unit which controls delay on each of said current-system optical network and said preliminary system optical network; and
a selection switching control unit which selectively switches to an appropriate one of said current-system optical network and said preliminary system optical network based on the result of the delay control carried out by said delay control unit.

2. The redundant optical multi-branch communication system according to claim 1, wherein if at least one of said daughter devices fails, said selection switching control unit carries out a control operation so that said plurality of daughter devices are selectively switched to another optical network that has no failure.

3. The redundant optical multi-branch communication system according to claim 1, wherein based upon the result of the delay control of said delay control unit, said selection switching control unit selectively switches to an appropriate one of said current-system optical network and said preliminary system optical network for each of said daughter devices separately.

4. The redundant optical multi-branch communication system according to claim 3, wherein based upon the result of delay control by the delay control unit, an optical network to which selection switching is made by the selection switching control unit is determined.

5. The redundant optical multi-branch communication system according to claim 3, wherein said selection switching control unit in said parent device preliminarily determines to which one of said current-system optical network and said preliminary system optical network each one of said daughter devices is to be switched, and said parent device sends information to each one of said daughter devices of the network about to which said daughter device will be switched, and each one of said daughter devices determines the network to which said daughter device is to be switched by said selection switching control unit based on the information received from said parent device.

6. The redundant optical multi-branch communication system according to claim 3, wherein said parent device comprises:
a plurality of buffers which temporarily store information input through said current-system optical network or said preliminary system optical network;
a table which stores first identifying information of each of said daughter devices that has been preliminarily set and second identifying information that is information sent from each of said daughter devices in association with each other; and
a selective reading control unit which identifies a transmission end of information input from said current-system optical network and said preliminary system optical network by reference to the corresponding relationship on said table and for controlling a reading operation from said buffer corresponding to the transmission end.

7. The redundant optical multi-branch communication system according to claim 6, wherein based upon the result of delay control of the delay control unit, each of said daughter devices determines an optical network to which switching is made by said selection switching control unit based upon the result of delay control of the delay control unit.

8. The redundant optical multi-branch communication systemaccording to claim 6, wherein said selection switching control unit in said parent device preliminarily determines to which one of said current-system optical network and said preliminary system optical network each one of said daughter devices is to be switched, and said parent device sends information to each one of said daughter devices of the network about to which said daughter device will be switched, and each one of said daughter devices determines the network to which said daughter device is to be switched by said selection switching control unit based on the information received from said parent device.

9. The redundant optical multi-branch communication system according to claim 1, further comprising:
a delay difference calculation unit which calculates a delay difference between said current-system optical network and said preliminary system optical network, and creates delay difference information relating to said current-system optical network and said preliminary system optical network based on the delay difference,
wherein said selection switching control unit delays information from the optical network of which the delay difference is small.

10. The redundant optical multi-branch communication system according to claim 9, wherein said selection switching control unit forcefully selects one of said current-system optical network and said preliminary system optical network when a trigger signal is received from outside.

11. The redundant optical multi-branch communication system according to claim 1, wherein some of said daughter devices have a non-redundant construction.

12. A redundant optical multi-branch communication system in which a parent device having a redundant construction and a plurality of daughter devices, each having a redundant construction, are connected to each other through a current-system optical network and a preliminary system optical network and a virtual path having a redundant construction is set so as to connect said parent device and said daughter devices, said redundant optical multi-branch communication system comprising:
a quality monitoring unit which monitors quality on said virtual path basis; and
a selection switching control unit which switches to an appropriate virtual path based upon the quality on the virtual path monitored by said quality monitoring unit.

13. The redundant optical multi-branch communication system according to claim 12, further comprising:
a delay control unit which controls each of the delay amounts on said current-system optical network and said preliminary system optical network,
wherein said selection switching control unit carries out a switching control on a virtual path basis if the result of delay control of said delay control unit is within a predetermined delay amount.

14. The redundant optical multi-branch communication system according to claim 12, further comprising:
a delay difference calculation unit which calculates a delay difference between said current-system optical network and said preliminary system optical network, and creates delay difference information relating to said current-system optical network and said preliminary system optical network based on the delay difference,
wherein said selection switching control unit delays information from the optical network of which the delay difference is small.

15. The redundant optical multi-branch communication system according to claim 14, wherein said selection switching control unit forcefully selects one of said current-system optical network and said preliminary system optical network when a trigger signal is received from outside.

16. The redundant optical multi-branch communication system according to claim 12, wherein some of said daughter devices have a non-redundant construction.
